# EUROPÄISCHE PATENTSCHRIFT

(11) **EP 2 394 882 B1**
(45) Veröffentlichungstag und Bekanntmachung des Hinweises auf die Patenterteilung: **22.01.2014**
(21) Anmeldenummer: 10005935.1
(22) Anmeldetag: 09.06.2010
(51) Int. Cl.: B61L 23/04, B61L 29/30

(54) **Funktionsgesicherter Scanner**
Scanner with secured function
Scanner en fonction sécurisé

(43) Veröffentlichungstag der Anmeldung: 14.12.2011
(73) Patentinhaber: Scheidt & Bachmann GmbH, D-41238 Mönchengladbach (DE)
(72) Erfinder: Laumen, Heinrich, 52538 Gangelt (DE)
(74) Vertreter: Stenger, Watzke & Ring

(56) Entgegenhaltungen:
- DE-U1- 9 411 602
- US-B2- 7 439 876
- FATEHI D ET AL: "DIGITALES BILDAUSWERTUNGSSYSTEM FUER BUE-FREIMELDUNG" SIGNAL + DRAHT, TELZLAFF VERLAG GMBH. DARMSTADT, DE, Bd. 88, Nr. 7/08, 1. Juli 1996 (1996-07-01), Seiten 17-21, XP000779794 ISSN: 0037-4997
- LOHMEIER S P ET AL: "Development of an ultra-wideband radar system for vehicle detection at railway crossings" IGARSS 2002. IEEE 2002 INTERNATIONAL GEOSCIENCE AND REMOTE SENSING SYMPOSIUM. TORONTO, SWEDEN, JUNE 24 -28, 2002; [IEEE INTERNATIONAL GEOSCIENCE AND REMOTE SENSING SYMPOSIUM], NEW YORK, NY : IEEE, US, Bd. 6, 24. Juni 2002 (2002-06-24), Seiten 3692-3694, XP010599343 ISBN: 978-0-7803-7536-9

## Beschreibung

Die vorliegende Erfindung betrifft ein Verfahren zur Überprüfung der Funktionalität von Scannersystemen sowie ein Scannersystem.

Scannersysteme sind umfangreich im Einsatz und im Stand der Technik bekannt. Moderne Scannersysteme wie Radarscanner und/oder Laserscanner sind in einfachen Ausführungen bereits im Automobil beispielsweise zur Abstandserkennung oder in Verbindung mit Einparkhilfen im Einsatz.

Hochgesicherte Scannersysteme sind zur Überprüfung von sicherheitsrelevanten Bereichen im Einsatz. Derartige Bereiche sind beispielsweise beschrankte Bahnübergänge, bei denen sichergestellt sein muss, dass der Schienenweg zur Durchfahrt eines Zuges frei ist, nachdem die Schranken geschlossen sind. Dies ist besonders relevant im Bereich von Bahnschrankensystemen in Verbindung mit Hauptverkehrsstraßen, Abzweigungen und dergleichen. Die US 7,439,876 B2 offenbart ein derartiges System.

Im Stand der Technik werden die Funktionalitäten von bekannten und im Einsatz befindlichen Systemen durch die Überprüfung des Vorhandenseins eines statischen Reflexionssignales nachgewiesen. Durch mehrfache Sicherheitskreise wird davon ausgegangen, dass Scannersysteme sicher funktionieren und Ergebnisse liefern.

Es sind jedoch im Stand der Technik keine Verfahren oder Systeme bekannt, die eine eindeutige Aussage über die Funktionsfähigkeit der Anlage ermöglichen.

Ein weiteres zum Stand der Technik gehörendes System ist beispielsweise beschrieben in der US 7,295,111 B2. Das beschriebene System umfasst einen Sender, der ein Signal entlang eines vorgegebenen Weges sendet und einen Modulationsreflektor, der das gesendete Signal empfängt. Dieser Modulationsreflektor umfasst einen Modulator, der das empfangene Signal empfängt und ein moduliertes Signal mit einer eindeutigen Charakteristik erzeugt. Dieses modulierte Signal wird wiederum ausgesandt und von dem ursprünglichen Receiver empfangen. Auf diese Weise stellt das System sicher, dass es sicher einen Scan durchführen kann.

Der Nachteil dieser vorbekannten Systeme besteht darin, dass aufgrund der Trägheit der Empfänger und der mit zunehmender Zeit bei statischem Signalempfang eintretenden "Erblindung", so dass unter ungünstigen Umständen nicht eine sichere Aussage über die Funktionalität oder Funktionssicherheit des Systems abgegeben werden kann. Auch ist es im schlimmsten Fall denkbar, dass das Reflexionssignal von einem anderen als dem vorgesehenen Reflektor ausgeht, so dass das System überfordert wird und nicht empfangssicher ist.

Ausgehend vom vorbeschriebenen Stand der Technik liegt der vorliegenden Erfindung die **Aufgabe** zugrunde, ein Verfahren zur Überprüfung der Funktionssicherheit von Scannersystemen bereitzustellen, welches eine gesicherte Aussage über die Funktionsfähigkeit des Systems ermöglicht. Dadurch wird ermöglicht, auch technisch einfachere und verfügbare Systeme für Überwachungsaufgaben einzusetzen, so dass die Sicherung von Gefahrenbereichen insgesamt wirtschaftlicher wird.

Zur technischen **Lösung** dieser Aufgabe wird verfahrensseitig mit der Erfindung vorgeschlagen ein Verfahren mit den Merkmalen des Anspruches 1. Weitere Vorteile und Merkmale der Erfindung ergeben sich aus den Unteransprüchen.

Gemäß Anspruch 1 wird erfindungsgemäß von dem Scannersystem zunächst ein erster Scanvorgang durchgeführt. Die Scanner der einfacheren Art senden und empfangen über große Flächenbereiche, wobei aber die Auswertung den jeweiligen Scanbereich durch die auszuwertenden Signale definiert. Gemäß der Erfindung wird ein Scanbereich definiert und ein erster Scan durchgeführt. Dann wird ein eindeutiges Reflexionselement in den Scanbereich eingebracht. Es wird dann ein zweiter Scanvorgang durchgeführt. Ergibt die Auswertung des zweiten Scanvorgangs, dass das Scanelement an der definierten Position erfasst wurde, ist daraus gesichert zu schließen, dass das Scannersystem funktioniert.

Bei dem Scannersystem kann es sich sowohl um Radarscanner als auch um Laserscanner handeln. Bei beiden Systemen wird im Grundprinzip eine elektromagnetische Welle ausgesendet und die Laufzeit bis zum Eintreffen von Reflexionen gemessen. Daraus lasst sich die Entfernung und/oder Lage von Reflexionselemente errechnet wird. Im Folgenden werden die Vorteile der Erfindung zunächst in Bezug auf Radarscansystem erläutert.

Das Reflexionselement wird mechanisch eingebracht und kann ein definiertes Reflexionselement sein, es kann aber auch ein in dem zu scannenden Bereich ohnehin vorhandenes bewegbares Element sein. Im Fall der Überwachung von Bahnschrankenbereichen kann hierfür die Schranke selbst verwendet werden. Auch der Zug kann als ein Reflexionselement dienen.

Der Radarscanner scannt zunächst den Einfahrtsbereich. Dann wird die Schranke geschlossen. Dann scannt der Radarscanner den gleichen Bereich, wobei im Rahmen der Erfindung die Bereichsauswahl durch die Auswertung definiert ist. Ergibt die Auswertung nach dem Schließen der Schranke, dass das Schrankenelement detektiert wurde, ist davon auszugehen, dass der Radarscanner funktioniert. Hat er keine weiteren Signale erfasst, ist davon auszugehen, dass der Einfahrtbereich frei ist. Die Steuerung kann dann auf den benachbarten Ausfahrtbereich umschalten und diesen Bereich in gleicher Weise auswerten. Sind diese Auswertungen abgeschlossen, kann erfindungsgemäß davon ausgegangen werden, dass der Gleisbereich frei ist. Da dies gegenläufig durchgeführt wird, können zwei einfache Radarscanner bereits einen gesamten Bahnübergangsbereich sichern.

Anders als bei der US 7,295,111 B2 kann bei der Erfindung nicht nur der sicherheitsrelevante Bereich überwacht werden, sondern die Erfindung ermöglicht es, ein durch den Scanner erfassbares Element wie die Schranke beim Bahnübergang zu erfassen und dadurch die Sicherheit zu erhöhen. Beim Bahnübergang kann die ordnungsgemäße Stellung der Schranken erfasst werden. Weiterhin kann hierdurch die Funktion des Scannersystems geprüft beziehungsweise überwacht werden. Darüber hinaus erlaubt diese Funktion einen Selbsttest, so dass bei einem schwer zugänglichen sicherheitsrelevanten Bereich eine hohe Zuverlässigkeit erreichbar ist.

Wenn der Zug selber als Reflexionselement verwendet wird, erfolgt ein erster Scanvorgang bevor der Zug den Bahnübergang passiert. Die Position des Zuges ist durch weitere Sensoren bekannt, die sich entlang der Strecke befinden und zum Stand der Technik gehören. Wenn der Zug nach Auswertung dieser vorbekannten Sensoren sich im Bereich des Bahnübergangs befindet, kann ein weiterer Scan erfolgen. Wenn die Auswertung dieses Scans ergibt, dass sich im Bereich des Bahnübergangs nun ein Objekt mit den Charakteristika eines Zuges befindet, wird von einer einwandfreien Funktion des Scannersystems ausgegangen. Ein Scanvorgang mit dem Zug selber als Reflexionselement kann zur routinemäßigen Überprüfung des Scannersystems dienen. Auf diese Weise kann eine Selbstdiagnose verwirklicht werden.

Mit der Erfindung wird ein einfaches Verfahren bereitgestellt, welches die Funktionssicherheit von Radarsystemen zu garantieren geeignet ist. Damit besteht die Möglichkeit, auch einfachere und verfügbare Scannersysteme einzusetzen. Es kann sich dabei beispielsweise um die im Automotivbereich eingesetzten Radarscanner handeln, so dass entsprechende Sicherungsaufgaben mit erheblichen Kosteneinsparungen durchgeführt werden können.

Alternativ können auch die oben erwähnten Laserscannersysteme eingesetzt werden. Diese senden einen oder mehrere Laserstrahlen aus und messen hierdurch die Entfernung bis zum Reflexionskörper. Durch eine Vielzahl von Messpunkten kann eine dreidimensionale Punktwolke erzeugt werden, durch die eine präzise Darstellung des Scanbereichs erfolgen kann.

Weitere Vorteile und Merkmale der Erfindung ergeben sich aus der folgenden Beschreibung anhand der Figuren. Dabei zeigen:

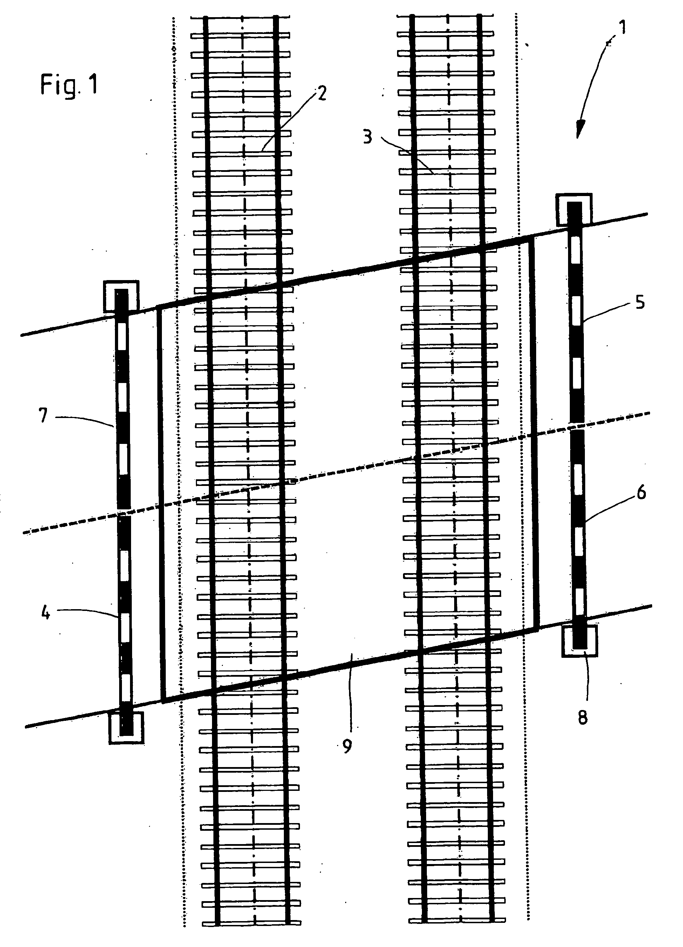

- Fig. 1: einen Bahnübergangsbereich mit einem schematisch angedeuteten zu überwachenden Sicherheitsbereich;

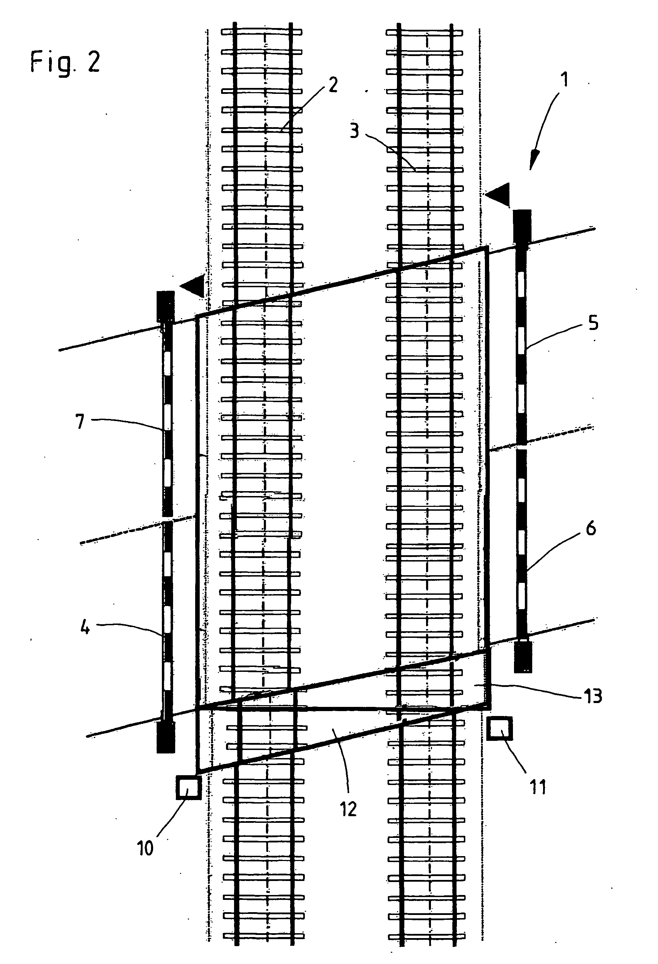

- Fig. 2: den Bahnübergangsbereich gemäß Fig. 1 mit zwei Radarscannern und deren sich überlappenden Scanbereichen;
- Fig. 3: eine Radarscansituation vor dem Schließen einer Schranke;
- Fig. 4: die Radarscansituation gemäß Fig. 3 nach dem Schließen der Schranke;
- Fig. 5: die Scansituation gemäß Figuren 3 und 4 für den Ausfahrtbereich;
- Fig. 6: der Bahnübergangsbereich gemäß Fig. 5 bei geschlossenen Ausfahrtschranken und
- Fig. 7: die Darstellung des gesicherten Bahnübergangsbereiches bei geschlossenen Schranken.

In den Figuren sind die gleichen Elemente mit gleichen Bezugszeichen versehen. Im Folgenden wird die Funktion der Erfindung anhand der Figuren erläutert.

Die Figuren zeigen beispielhaft einen Bahnübergang 1, der die Gleise 2 und 3 umfasst sowie die Schranken 4, 5, 6 und 7, um den Bahnübergangsbereich zu sichern. Jede der Schranken ist mit einer Antriebseinheit 8 aus einer vertikalen in eine horizontale Sperrposition verschwenkbar. Der zu sicherende Bereich ist der Bereich 9. Bevor ein Zug über ein Gleis 2 oder 3 den Bahnübergang passiert, muss absolut sichergestellt sein, dass sich kein Fahrzeug oder keine Person in dem Überwachungsbereich 9 befindet.

Erfindungsgemäß sind zu diesem Zweck zwei Radarscanner 10 und 11 positioniert. Der Radarscanner 10 hat einen Scanbereich 12, der beim Radarscanner 10 beginnt und den gesamten Bahnübergangsbereich abdeckt. Das Gleiche gilt für den Radarscanner 11, der den Scanbereich 13 hat und den gesamten Bahnübergangsbereich abscannt. Mittels der Auswerteschaltung lassen sich die Bereiche jedoch segmentweise auswerten. So sind die Auswertebereiche für die Zufahrtsschranken 4 und 5 jeweils die Auswertebereiche 14 des Radarscanners 11 bzw. Auswertebereich 15 des Radarscanners 10.

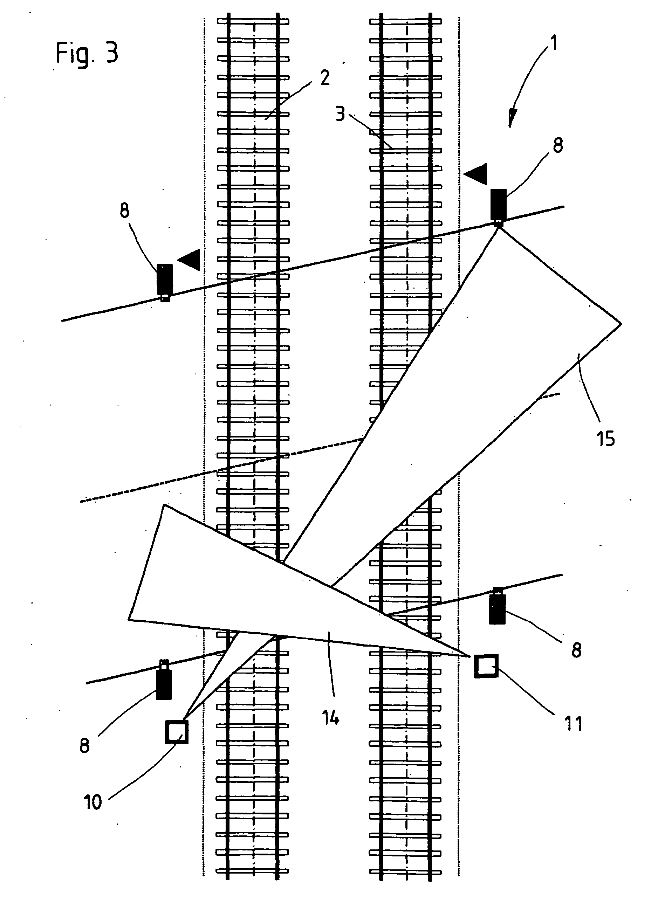

Ausgangssituation ist die in Fig. 3 gezeigte Ausgangssituation. Ein Zug ist angekündigt und die Schranken sollen geschlossen werden. In an sich bekannter Weise wird von der Steuerung zunächst der Zeitablauf nach Betätigung einer nicht gezeigten Ampelanlage erfasst. Es liegen ausreichend Erkenntnisse über den Verlauf der Zeit nach einer Rotschaltung vor, in Abhängigkeit von Geschwindigkeiten, Fahrzeuglängen und dergleichen ist nach einer gewissen Zeit zu erwarten, dass sich kein Fahrzeug mehr im Einfahrtbereich befindet.

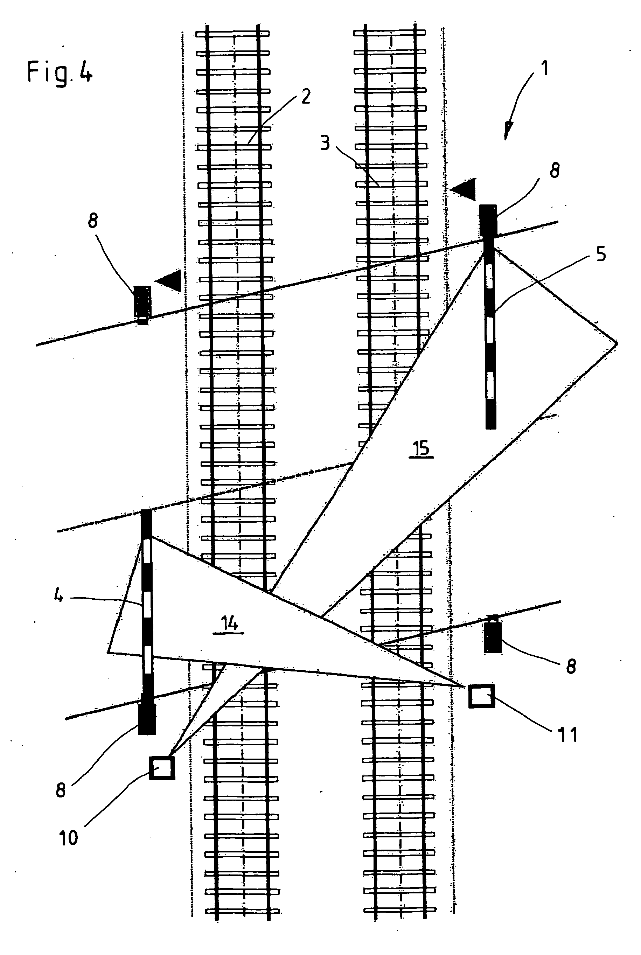

Gemäß der Erfindung wird dann wie in Fig. 3 gezeigt der Radarscanner 10 scannen, und es wird der Scanbereich 15 ausgewertet. Das gleiche gilt für den Radarscanner 11, dessen Scanbereich 14 ausgewertet wird. Dann wird die Schranke 4 bzw. die Schranke 5 geschlossen, die jeweils den Zufahrtsweg zum Bahnübergangsbereich verschließen. Es erfolgt dann ein weiterer Scanvorgang, und es wird wiederum der Scanbereich 14 bzw. der Scanbereich 15 ausgewertet, wie dies in Fig. 4 gezeigt ist. Ergibt die Auswertung nun, dass der Schrankenkörper erfasst ist, ist davon auszugehen, dass nun die Messung des Scanbereiches vor dem Schließen der Schranke sicher war. Sofern also die Schranke gesichert geschlossen ist, was zugleich bedeutet, dass sich kein Hindernis im Schrankenverfahrweg befindet, und sofern der in Fig. 3 gezeigte Scanvorgang keine weiteren Reflexionen hervorbrachte, kann nunmehr davon ausgegangen werden, dass der Zufahrtsbereich frei ist.

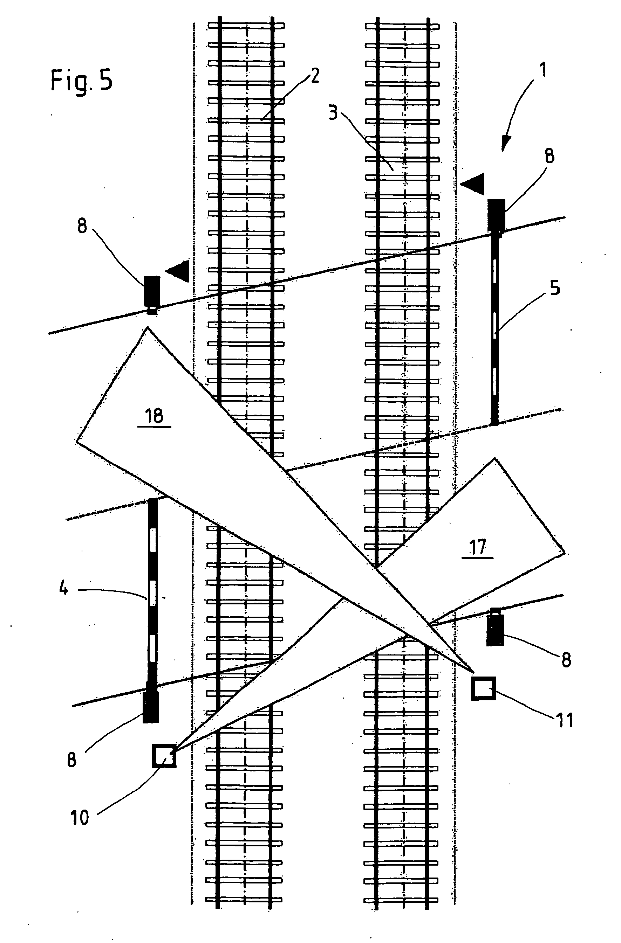

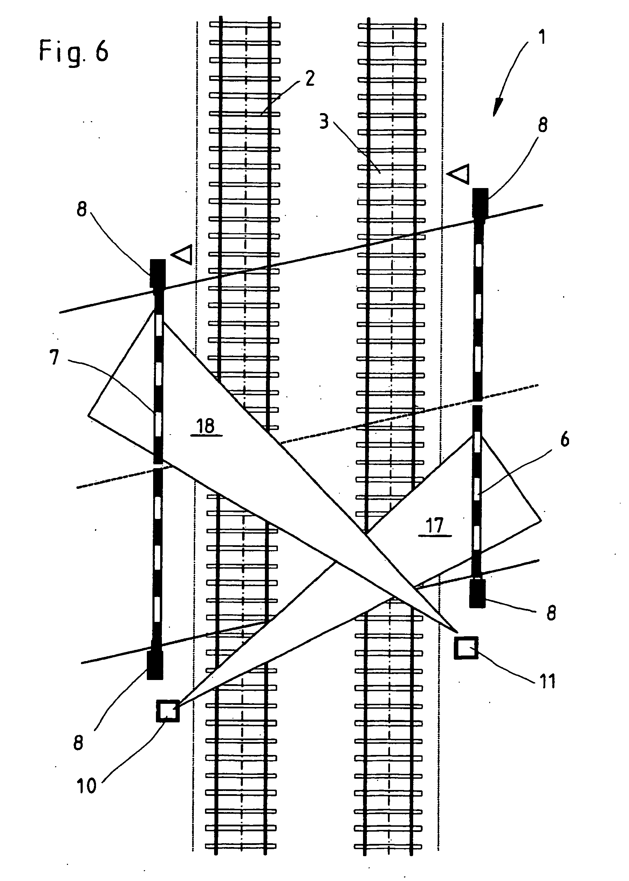

Es wird anschließend der Ausfahrtbereich gescannt, wozu bei dem Radarscanner 10 der Scanbereich 17 und beim Radarscanner 11 der Scanbereich 18 ausgewertet werden, wie dies in Fig. 5 gezeigt ist. Ebenfalls in Abhängigkeit von der Zeitsteuerung der Gesamtanlage werden dann die Schranken 6 und 7 geschlossen und der Scanvorgang sowie die Auswertung der Scanbereiche 17 und 18 wiederholt, wie dies in Fig. 6 gezeigt ist. Auch hier ergibt die Auswertung vorzugsweise, dass der Schrankenkörper eindeutig erkannt wurde. Ist dies der Fall, ist davon auszugehen, dass die in Fig. 5 gezeigte Messung richtig und erfolgreich war, der Ausfahrtweg ebenfalls frei ist.

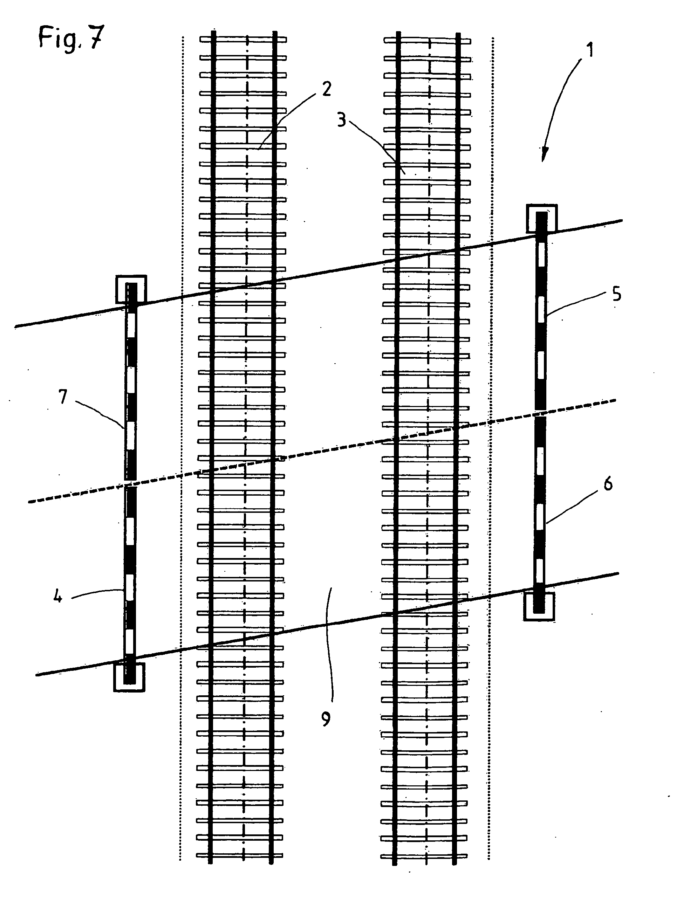

Es zeigt sich somit, dass Einfahrten und Ausfahrten gesichert frei waren, d. h., Fig. 7 zeigt einen quadergesicherten, leeren Bahnübergangsbereich 9, so dass entlang der Gleise 2 und/oder 3 Züge ungehindert fahren können.

Die Scannersysteme 10 und 11 können kostengünstige und in großen Mengen verfügbare Scanner sein, die aufgrund der erfindungsgemäßen Vorgehensweise hinsichtlich ihrer Funktionssicherheit bei jedem einzelnen Scanvorgang überprüft und somit gesichert werden.

Das beschriebene Ausführungsbeispiel dient nur der Erläuterung und ist nicht beschränkend.

### Bezugszeichenliste

- 1: Bahnübergang
- 2: Gleis
- 3: Gleis
- 4: Schranke
- 5: Schranke
- 6: Schranke
- 7: Schranke
- 8: Schrankenantrieb
- 9: Überwachungsbereich
- 10: Radarscanner
- 11: Radarscanner
- 12: Erfassungsbereich
- 13: Erfassungsbereich
- 14: Auswertebereich
- 15: Auswertebereich
- 17: Auswertebereich
- 18: Auswertebereich

## Patentansprüche

1. Verfahren zur Überprüfung und/oder Überwachung der Funktionalität eines Scannersystemes mit einem Scanner (10, 11), welches eine elektromagnetische Welle aussendet, die Laufzeit bis zum Eintreffen von Reflexionen misst und daraus die Entfernung und/oder die Lage eines durch den Scanner (10, 11) erfassbaren Elements (4, 5, 6, 7) errechnet,
**dadurch gekennzeichnet,**
**dass**
a) in einem ersten Scanvorgang die Scanslgnale eines definierten Scanbereiches (14, 15, 17, 18) erfasst und ausgewertet werden,
b) in den Scanbereich (14, 15, 17, 18) ein vorbekanntes, definiertes und durch den Scanner (10, 11) erfassbares Element (4, 5, 6, 7) eingebracht wird und
c) in einem zweiten Scanvorgang des Scanbereiches (14, 15, 17, 18) die Scansignale erfasst und ausgewertet werden, wobei das Auswerten ergibt, ob das vorbekannte, definierte und durch den Scanner (10, 11) erfassbare Element (4, 5, 6, 7) erfasst worden ist,
wobei mittels einer Auswerteschaltung der Scanbereich (14, 15, 17, 18) segmentiert ausgewertet wird, zu welchem Zweck zwischen den Scanauswertebereichen des Scanners (10, 11) umgeschaltet wird.

2. Verfahren nach Anspruch 1, **dadurch gekennzeichnet, dass** zum Scannen wenigstens ein Radarscanner (10, 11) eingesetzt wird.

3. Verfahren nach Anspruch 1 oder 2, **dadurch gekennzeichnet, dass** zum Scannen wenigstens ein Laserscanner eingesetzt wird.

4. Verfahren nach einem der Ansprüche 1 bis 3, **dadurch gekennzeichnet, dass** in den Scanbereich ein Reflexionselement eingebracht wird.

5. Verfahren nach Anspruch 4, dass als Reflexionselement ein im Scenbereich vorhandenes Funktionselement verwendet wird.

6. Verfahren nach einem der vorhergehenden Ansprüche, **dadurch gekennzeichnet, dass** als erfassbares Element eine Schranke (4, 5, 6, 7) verwendet wird.

7. Verfahren nach einen der vorhergehenden Ansprüche, **dadurch gekennzeichnet, dass** als erfassbares Element ein Zug verwendet wird.

8. Verfahren nach einem der vorhergehenden Ansprüche, **dadurch gekennzeichnet, dass** der Scanauswertebereich (14, 15, 17, 18) eingestellt wird.

## Claims

1. A method for checking and/or monitoring the functionality of a scanner system comprising a scanner (10, 11), which system sends out an electromagnetic wave, measures the propagation time until the arrival of reflections and on the base of this calculates the distance and/or the position of an element (4, 5, 6, 7) that can be detected by the scanner (10, 11),
**characterized in that**
a) in a first scanning operation the scan signals of a defined scan area (14, 15, 17, 18) are collected and evaluated;
b) a previously known defined element (4, 5, 6, 7) that can be detected by the scanner (10, 11) is introduced into the scan area (14, 15, 17, 18) and
c) in a second scanning operation of the scan area (14, 15, 17, 18) the scan signals are collected and evaluated, wherein the evaluation shows whether the previously known defined element (4, 5, 6, 7) that can be detected by the scanner (10, 11) has been detected,
wherein the scan area (14, 15, 17, 18) is evaluated in a segmental manner by means of an evaluation circuit, for which purpose it is switched between the scan evaluation areas of the scanner (10, 11).

2. A method according to claim 1, **characterized in that** at least one radar scanner (10, 11) is used for scanning.

3. A method according to claim 1 or 2, **characterized in that** at least one laser scanner is used for scanning.

4. A method according to one of the claims 1 through 3, **characterized in that** a reflection element is introduced into the scan area.

5. A method according to claim 4, **characterized in that** a functional element that is present in the scan area is used as reflection element.

6. A method according to one of the preceding claims, **characterized in that** a barrier (4, 5, 6, 7) is used as detectable element.

7. A method according to one of the preceding claims, **characterized in that** a train is used as detectable element.

8. A method according to one of the preceding claims, **characterized in that** the scan evaluation area (14, 15, 17, 18) is set.

## Revendications

1. Procédé de vérification et/ou de surveillance de la fonctionnalité d'un système de scanner comprenant un scanner (10, 11), lequel système émet une one électromagnétique, mesure le temps de propagation jusqu'à l'arrivée des réflexions et calcule à ce base la distance et/ou la position d'un élément (4, 5, 6, 7) détectable par le scanner (10, 11),
**caractérisé en ce que**
a) les signaux de balayage d'une zone de balayage définie (14, 15, 17, 18) sont collectés et évalués pendant une première opération de balayage,
b) un élément (4, 5, 6, 7) préalablement connu, défini et détectable par le scanner est introduit dans la zone de balayage (14, 15, 17, 18) et
c) les signaux de balayage sont collectés et évalués pendant une deuxième opération de balayage de la zone de balayage (14, 15, 17, 18), dans lequel l'évaluation montre si l'élément préalablement connu, défini et détectable par le scanner (10, 11) a été détecté,
la zone de balayage (14, 15, 17, 18) étant évaluée de façon segmentaire par moyen d'un circuit d'évaluation, et dans ce but il est commuté entre les zones d'évaluation de balayage du scanner (10, 11).

2. Procédé selon la revendication 1, **caractérisé en ce qu'**on utilise au moins un scanner radar (10, 11) pour le balayage.

3. Procédé selon la revendication 1 ou la revendication 2, **caractérisé en ce qu'**on utilise au moins un scanner laser pour le balayage.

4. Procédé selon l'une des revendications 1 à 3, **caractérisé en ce qu'**on introduit un élément de réflexion dans la zone de balayage.

5. Procédé selon la revendication 4, **caractérisé en ce qu'**on utilise un élément fonctionnel qui se trouve dans la zone de balayage en tant que élément de réflexion.

6. Procédé selon l'une des revendications précédentes, **caractérisé en ce qu'**on utilise une barrière (4, 5, 6, 7) en tant que élément détectable.

7. Procédé selon l'une des revendications précédentes, **caractérisé en ce qu'**on utilise un train en tant que élément détectable.

8. Procédé selon l'une des revendications précédentes, **caractérisé en ce qu'**on configure la zone d'évaluation de balayage (14, 15, 17, 18).
